# EUROPÄISCHE PATENTSCHRIFT

(11) **EP 1 934 077 B1**
(45) Veröffentlichungstag und Bekanntmachung des Hinweises auf die Patenterteilung: **06.01.2010**
(21) Anmeldenummer: 06806951.7
(22) Anmeldetag: 04.10.2006
(51) Int. Cl.: B60T 8/40

(54) **ELEKTROHYDRAULISCHE BREMSANLAGE FÜR KRAFTFAHRZEUGE**
ELECTROHYDRAULIC BRAKING SYSTEM FOR MOTOR VEHICLES
SYSTEME DE FREINAGE ELECTROHYDRAULIQUE POUR VEHICULES AUTOMOBILES

(30) Priorität: 07.10.2005 DE 102005048437; 25.04.2006 DE 102006019040
(43) Veröffentlichungstag der Anmeldung: 25.06.2008
(73) Patentinhaber: Continental Teves AG & Co. oHG, 60488 Frankfurt (DE)
(72) Erfinder: RIETH, Peter, 65343 Eltville (DE); SCHIEL, Lothar, 65719 Hofheim (DE); DRUMM, Stefan, A., 55291 Saulheim (DE)
(86) Internationale Anmeldenummer: PCT/EP2006/067015
(87) Internationale Veröffentlichungsnummer: WO 2007/042432

(56) Entgegenhaltungen:
- WO-A-95/29830
- WO-A-98/26966
- WO-A-98/57833
- WO-A-03/047936
- WO-A-2005/005214
- DE-A1- 3 424 912

## Beschreibung

Die Erfindung betrifft eine elektrohydraulische Bremsanlage für Kraftfahrzeuge, vom Typ "Brake-by-Wire" gemäß dem Oberbegriff des Patentanspruchs 1.

Ein elektrohydraulisches Bremssystem vom Typ "Brake-by-Wire" ist z. B. aus der internationalen Patentanmeldung WO 03/047936 bekannt. Das vorbekannte Bremssystem weist hydraulische Mittel auf, die in einer durch einen Ausfall von elektrohydraulischen Komponenten charakterisierten Notfall- oder Rückfallbetriebsart einen im Hochdruckspeicher vorhandenen hydraulischen Druck dazu einsetzen, die Bremsflüssigkeit, die während der vorangegangenen Normalbremsung im "Brake-by-Wire"-Modus vom Hauptzylinder in den Wegsimulator verdrängt wurde, für eine mechanisch-hydraulische Hilfsbremsung zur Verfügung zu stellen, indem durch ein hydraulikventilgesteuertes Aufschalten des Hochdruckspeicher-Drucks auf einen im Normalbetrieb mit dem Bremsflüssigkeitsvorratsbehälter verbundenen hydraulischen Raum des Wegsimulators Druckmittel aus einem mit dem Hauptzylinder verbundenen hydraulischen Raum des Wegsimulators in den Hauptbremszylinder und einen daran angeschlossenen Hilfsbremskreis verdrängt wird, so dass die Radbremsen mit einem hydraulischen Druck betätigt werden, der durch die Muskelkraft des Fahrzeugführers vorgegeben ist, mit der dieser das Bremspedal betätigt. Die ergonomischen Kräfteverhältnisse in elektrohydraulischen Bremsanlagen für Kraftfahrzeuge vom Typ "Brake-by-Wire" erfordern bekanntermaßen eine Auslegung des Bremssystems, bei der im Normalbremsbetrieb die Radbremsdrücke ein Vielfaches des Hauptzylinderdrucks betragen.

Als nachteilig wird bei dem vorbekannten Bremssystem die Tatsache empfunden, dass bei einem Ausfall der elektrohydraulischen Komponenten lediglich eine Abbremsung des Fahrzeuges mit einem Bremsdruck weit unterhalb des im "Brake-by-Wire"-Modus bei gleicher Betätigungskraft erreichten Wertes möglich ist. Eine Bremskraftverstärkung mit Radbremsdrücken oberhalb des vom Fahrzeugführer mit dem Bremspedal in den Hauptbremszylinder eingesteuerten Drucks ist ohne voll funktionsfähige elektrohydraulischen Komponenten nicht darstellbar. Weiterhin wird als nachteilig empfunden, dass von dem erwähnten plötzlichen Rückfördern von Druckmittel aus dem Wegsimulator in den Hauptbremszylinder Rückwirkungen auf das Bremspedal verursacht werden, die geeignet sind, den Fahrzeugführer zusätzlich zum Verlust der Bremskraftverstärkung zu irritieren.

Ein gattungsbildendes Bremssystem ist beispielsweise aus der WO 98 26966 A bekannt. In der Wirkungskette zwischen der Druckquelle und den Radbremsen sind eine Ventilanordnung sowie mindestens eine Zylinder-Kolben-Anordnung vorgesehen, wobei die Ventilanordnung sowohl hydraulisch durch den vom Hauptbremszylinder bereitgestellten Druck als auch elektrisch steuerbar ausgebildet ist. Die Zylinder-Kolben-Anordnung ist durch den von der Ventilanordnung bereit gestellten Druck betätigbar.

Es ist daher Aufgabe der vorliegenden Erfindung, ein zuverlässig funktionierendes Bremssystem der eingangs genannten Gattung zur Verfügung zu stellen bzw. ein Bremssystem vorzuschlagen, bei dem eine weitere Rückfallbetriebsart vorgesehen ist, die bei einem Ausfall der elektrohydraulischen Komponenten eine Abbremsung des Fahrzeuges mit Bremsdrücken ermöglicht, die größer sind, als der durch die Muskelkraft des Fahrzeugführers im Hauptbremszylinder vorgegebene Druck.

Diese Aufgabe wird erfindungsgemäß dadurch gelöst, dass die Zylinder-Kolben-Anordnung auch durch den vom Hauptbremszylinder bereit gestellten Druck betätigbar ist.

Die Ventilanordnung gibt vorzugsweise einen analog steuerbaren hydraulischen Fremddruck ab, der über hydraulische Verbindungen zu der bzw. den Zylinder-Kolben-Anordnungen geleitet wird.

Zur Konkretisierung des Erfindungsgedankens wird vorgeschlagen, dass die Zylinder-Kolben-Anordnung durch ein Gehäuse mit zylindrischer Bohrung, einen ersten bzw. Reaktionskolben, der mit einem durch eine Betätigung des Hauptbremszylinders eingesteuerten hydraulischen Betätigungsdruck beaufschlagbar ist, sowie einen im Gehäuse dem ersten bzw. Reaktionskolben gegenüberliegend angeordneten zweiten bzw. Bremsdruckkolben, der im Gehäuse einerseits eine Bremsdruckkammer begrenzt, an die die Radbremsen angeschlossen sind, und andererseits mit dem von der Ventilanordnung bereitgestellten Druck beaufschlagbar ist.

Bei einer anderen vorteilhaften Ausgestaltung der Erfindung ist die Bremsdruckkammer mittels einer absperrbaren hydraulischen Verbindung an den Druckmittelvorratsbehälter angeschlossen, die durch eine Relativbewegung des zweiten bzw. Bremsdruckkolbens gegenüber dem Gehäuse absperrbar ist.

Bei einer vorteilhaften Weiterbildung des Erfindungsgegenstandes begrenzen der erste bzw. Reaktionskolben und der zweite bzw. Bremsdruckkolben einen Zwischenraum, der mit dem von der Ventilanordnung bereitgestellten Druck beaufschlagbar ist.

Eine andere vorteilhafte Ausgestaltung der Erfindung besteht darin, dass der Innenraum des ersten bzw. Reaktionskolbens eine hydraulische Simulatorkammer bildet, die eine Simulatorfeder aufnimmt und die von einem im ersten bzw.

Reaktionskolben geführten Simulatorkolben begrenzt ist.

Die Simulatorfeder wird vorzugsweise durch eine Parallelanordnung einer linearen Feder sowie einer progressiven Feder, vorzugsweise einer Elastomerfeder, gebildet, wobei die progressive Feder vorzugsweise erst nach dem Zurücklegen eines vorbestimmten Deformationsweges der linearen Feder wirksam wird.

Die Simulatorkammer ist bei einer weiteren Ausführung des Erfindungsgegenstandes mittels einer absperrbaren hydraulischen Verbindung an den Druckmittelvorratsbehälter angeschlossen, die durch eine Relativbewegung des ersten bzw. Reaktionskolbens gegenüber dem Gehäuse absperrbar ist.

Bei einer weiteren Ausführung des Erfindungsgegenstandes ist zum elektrischen Steuern des von der Ventilanordnung abgegebenen Fremddrucks ein Kraftaktuator vorgesehen.

Eine andere vorteilhafte Ausführungsvariante des Erfindungsgegenstandes sieht vor, dass zum elektrischen Steuern des von der Ventilanordnung abgegebenen Fremddrucks elektrohydraulische Mittel vorgesehen sind, die einen elektrisch analog steuerbaren Druck abgeben. Dies hat den Vorteil, dass die Stellenergie zum elektrischen Steuern der Ventilanordnung im Wesentlichen dem Hochdruckspeicher entnommen wird, wodurch der elektrische Leistungsbedarf der elektronischen Steuer- und Regeleinheit verringert wird.

Eine vorteilhafte Weiterbildung des Erfindungsgegenstandes sieht vor, dass die elektrohydraulischen Mittel durch analog regelbare Elektromagnetventile gebildet werden, die mit der Druckquelle und dem Druckmittelvorratsbehälter hydraulisch verbunden sind. Diese regelbaren Elektromagnetventile haben sich bereits als Bremssystemkomponenten bewährt. Auch in der vorbekannten Bremsanlage sind sie enthalten, wenn auch an anderer Stelle und in anderer Funktion.

Eine andere vorteilhafte Weiterbildung des Erfindungsgegenstandes sieht vor, dass die Betätigung der Ventilanordnung mittels eines Betätigungselementes erfolgt, das mit einem Ventilkörper der Ventilanordnung in kraftübertragender Verbindung steht. Eine hydraulisch wirksame Querschnittsfläche des Betätigungselements definiert den Proportionalitätsfaktor zwischen dem Hauptbremszylinderdruck und der übertragenen Ventilbetätigungskraft.

Bei einer anderen vorteilhaften Ausgestaltung der Erfindung ist die Ventilanordnung als ein Schieberventil ausgebildet. Gegenüber anderen an dieser Stelle ebenso gut einsetzbaren Ventilbauarten mit Ventilsitzen bzw. Kombinationen von Ventilsitz und Steuerkanten in Schieberbauweise hat das Schieberventil den Vorzug eines einteiligen Aufbaus. Das vorhin erwähnte Betätigungselement ist bei einer weiteren Ausführung des Erfindungsgegenstandes als ein hydraulischer Kolben ausgeführt, der sowohl mit dem vom Hauptbremszylinder bereitgestellten Druck als auch mit dem elektrisch steuerbaren Druck beaufschlagbar ist. Der hydraulische Kolben begrenzt vorzugsweise einen hydraulischen Raum, der mit einem der bereitgestellten Drücke beaufschlagbar ist. Bei zugeschaltetem elektrisch analog steuerbarem Druck arbeitet die Bremsanlage in der "Brake-by-Wire" Betriebsart, bei Zuschaltung des Hauptzylinderdrucks in der erwähnten Rückfallbetriebsart als Bremsanlage mit rein hydraulischer Verstärkung.

Eine andere sinnvolle Weiterbildung der Erfindung besteht darin, in den Verbindungen zwischen dem Hauptbremszylinder und dem hydraulischen Raum sowie zwischen den elektrohydraulischen Mitteln und dem hydraulischen Raum ein Wechselventil einzufügen, das durch eine Druckdifferenz zwischen dem vom Hauptbremszylinder bereitgestellten Druck und dem elektrisch steuerbaren Druck betätigt wird.

Dabei erfolgt die hydraulische Betätigung des Wechselventils derart, dass der hydraulische Raum mit dem jeweils höheren Druck beaufschlagt wird. Damit wird automatisch zwischen der "Brake-by-Wire"-Betriebsart und der hydraulisch verstärkten Betriebsart derart umgeschaltet, dass sich die jeweils höhere Bremsdruckanforderung durchsetzt.

Eine andere vorteilhafte Ausführungsvariante des Erfindungsgegenstandes sieht vor, dass der hydraulische Kolben als ein Stufenkolben ausgeführt ist, dessen eine Fläche mit dem vom Hauptbremszylinder bereitgestellten Druck beaufschlagbar ist, während dessen andere Fläche mit dem elektrisch analog steuerbaren Druck beaufschlagbar ist. In dieser Variante kann auf ein Wechselventil zur Auswahl der jeweils höheren Radbremsdruckanforderung verzichtet werden. Vorzugsweise wird die Ringfläche des Stufenkolbens dem Hauptzylinderdruck und die Kolbenfläche mit kleinerem Durchmesser dem elektrisch analog steuerbaren Druck zugeordnet.

In einer weiteren Ausführungsvariante wird der vorhin erwähnte hydraulische Raum andererseits von einem weiteren, mittels einer Feder vorgespannten Kolben begrenzt, dessen Bewegung gegen die Kraft der Feder eine Volumenaufnahme für das von den elektrohydraulischen Mitteln abgegebene Druckmittel ermöglicht. Eine solche Volumenaufnahme verbessert die Regelgüte der elektrohydraulischen Druckregelung in der "Brake-by-Wire"-Betriebsart.

Weitere Einzelheiten, Merkmale und Vorteile der Erfindung gehen aus der nachfolgenden Beschreibung von vier Ausführungsbeispielen unter Bezugnahme auf die beiliegende Zeichnung hervor. In der Zeichnung, in der die gleichen Komponenten mit den gleichen Bezugszeichen versehen sind, zeigen:
Fig. 1 den Aufbau einer ersten Ausführungsform des erfindungsgemäßen Bremssystems im unbetätigten und stromlosen Zustand;
Fig. 2 eine stark vergrößerte Darstellung der in Fig. 1 gezeigten Zylinder-Kolben-Anordnung;
Fig. 3 eine stark vergrößerte Darstellung der in Fig. 1 gezeigten Ventilanordnung;
Fig. 4 den Aufbau einer zweiten Ausführungsform des erfindungsgemäßen Bremssystems im unbetätigten und stromlosen Zustand;
Fig. 5 eine stark vergrößerte Darstellung der in Fig. 4 gezeigten Ventilanordnung;
Fig. 6 den Aufbau einer dritten Ausführungsform des erfindungsgemäßen Bremssystems im unbetätigten und stromlosen Zustand, und
Fig. 7 eine stark vergrößerte Darstellung der in Fig. 6 gezeigten Ventilanordnung.

Das in der Zeichnung lediglich schematisch dargestellte elektrohydraulische Bremssystem besteht im wesentlichen aus einem mittels eines Bremspedals 1 betätigbaren, zweikreisigen hydraulischen Druckerzeuger bzw. Hauptbremszylinder 2 in Tandemausführung, einem mit dem Tandemhauptzylinder 2 zusammenwirkenden Wegsimulator 3, einem Druckmittelvorratsbehälter 4, einem schematisch dargestellten Hydraulikmodul 5, einer hydraulischen Steuereinheit HCU 6, an die den Fahrzeugrädern zugeordnete Radbremsen 7, 8, 9, 10 angeschlossen sind, sowie einer elektronischen Steuer- und Regeleinheit 16. Im Hydraulikmodul 5 sind eine Druckquelle, eine mit dem Bezugszeichen 13 versehene Ventilanordnung sowie zwei Zylinder-Kolben-Anordnungen 17, 18 integriert, deren Aufgabe nachfolgend erläutert wird. Die hydraulische Steuereinheit HCU 6 enthält sämtliche, für radindividuelle Druckregelvorgänge erforderlichen Komponenten, die im wesentlichen aus mindestens einer Rückförderpumpe sowie Druckregelventilen bestehen.

Zur Ermittlung der Drehzahl der Fahrzeugräder dienen lediglich angedeutete, nicht näher bezeichnete Radsensoren. Der an sich bekannte Tandemhauptzylinder 2 weist durch zwei Kolben 11, 12, begrenzte, voneinander getrennte Druckräume 14, 15 auf, die einerseits mit dem Druckmittelvorratsbehälter 4 und andererseits mittels Leitungen 26, - mit den Eingangsanschlüssen der Zylinder-Kolben-Anordnungen 17, 18 verbunden sind. Die vorhin erwähnte Druckquelle wird durch ein Motor-Pumpenaggregat 20, das aus einem Elektromotor 22 sowie eine vom Elektromotor 22 angetriebene Pumpe 23 besteht, ein der Pumpe 23 parallel geschaltetes Druckbegrenzungsventil 24 sowie einen durch die Pumpe 23 aufladbaren Hochdruckspeicher 21 gebildet. Der im Hochdruckspeicher 21 vorliegende hydraulische Druck wird von einem Drucksensor 25 überwacht.

Die vorhin erwähnte Ventilanordnung 13, die im gezeigten Beispiel als ein Schieberventil ausgebildet ist, ist wirkungsmäßig zwischen der Druckquelle 20, 21 und jeweils einem weiteren Eingangsanschluss der Zylinder-Kolben-Anordnungen 17, 18 geschaltet und wird einerseits durch einen elektromechanischen Aktuator 28 und andererseits durch den im ersten Druckraum 14 des Hauptbremszylinders 2 eingesteuerten hydraulischen Druck betätigt.

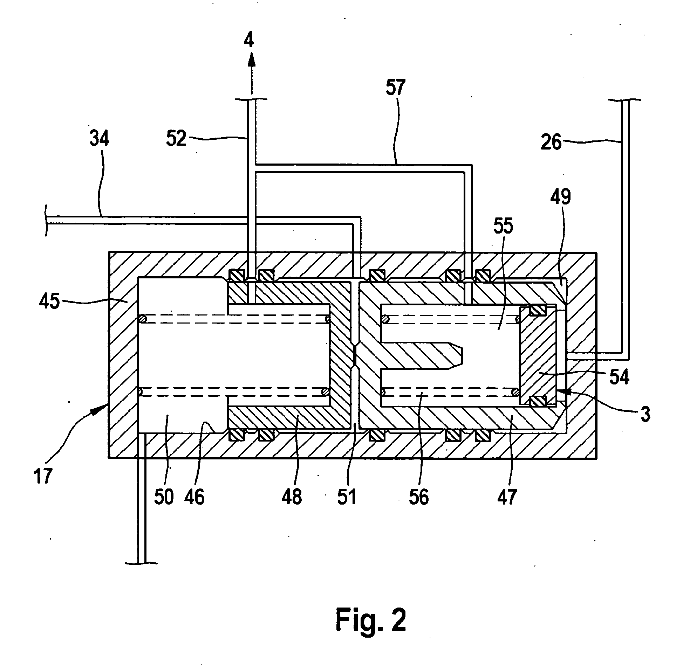

Wie weiterhin der Zeichnung zu entnehmen ist, sind die Radbremsen 7, 8, 9, 10 an jeweils eine Druckkammer der Zylinder-Kolben-Anordnung 17, 18 angeschlossen, die im Zusammenhang mit Fig. 2 ausführlich beschrieben wird. Vor der Zylinder-Kolben-Anordnung 17 zweigt von der vorhin erwähnten Leitung 26 eine weitere, zur Ventilanordnung 13 führende Leitung 27 ab, die der hydraulischen Ansteuerung der Ventilanordnung 13 dient. Der im ersten Druckraum 14 eingesteuerte Druck wird mittels eines Drucksensors 19 überwacht, während der von der Ventilanordnung 13 gelieferte Druck mittels eines Drucksensors 29 erfasst wird. Die obigen Erläuterungen gelten entsprechend auch für den zweiten Druckraum 15, die zweite Zylinder-Kolben-Anordnung 18 sowie die an eine Druckkammer der zweiten Zylinder-Kolben-Anordnung 18 angeschlossenen Radbremsen 9, 10.

Die vorhin erwähnte elektronische Regel- und Steuereinheit 16, der die Ausgangssignale der Drucksensoren 19, 25, 29, der Raddrehzahlsensoren sowie einer vorzugsweise redundant ausgeführten Bremswunscherfassungseinrichtung 58 zugeführt werden, die dem Hauptbremszylinder 2 zugeordnet ist, dient der Ansteuerung des Motor-Pumpen-Aggregats 20, des Aktuators 28, sowie der elektrischen Komponenten der hydraulischen Steuereinheit HCU 6.

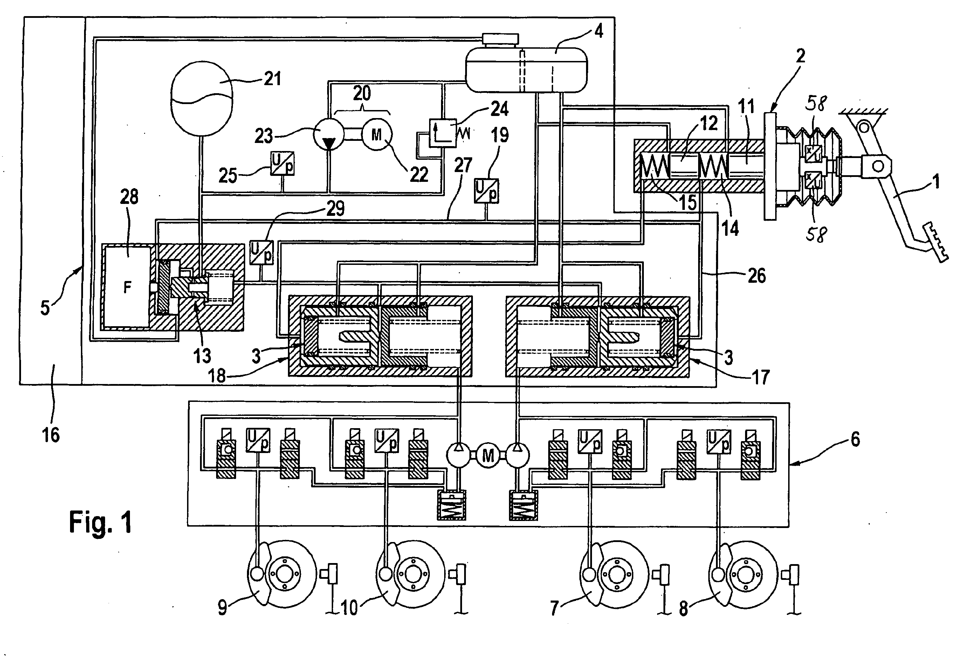

Im Zusammenhang mit der nachfolgenden Beschreibung der Zylinder-Kolben-Anordnungen 17, 18 wird darauf hingewiesen, dass deren Aufbau identisch ist, so dass lediglich eine ausführlich erläutert wird. Wie insbesondere aus Fig. 2 zu erkennen ist, besteht die Zylinder-Kolben-Anordnung 17 im Wesentlichen aus einem Gehäuse 45 mit einer zylindrischen Bohrung 46, einem ersten bzw. Reaktionskolben 47, dem ersten bzw. Reaktionskolben 47 gegenüberliegend angeordneten zweiten bzw. Bremsdruckkolben 48, einer im Gehäuse 45 vom Reaktionskolben 47 begrenzte Betätigungsdruckkammer 49, einer im Gehäuse 45 vom Bremsdruckkolben 48 begrenzten Bremsdruckkammer 50 sowie einem vom Reaktionskolben 47 sowie dem Bremsdruckkolben 48 begrenzten Zwischenraum 51. Dabei ist die Betätigungsdruckkammer 49 über die Leitung 26 mit dem im ersten Druckraum 14 des Hauptbremszylinders 2 eingesteuerten hydraulischen Druck beaufschlagbar, während an die Bremsdruckkammer 50, wie bereits erwähnt wurde, die Radbremsen 7, 8 angeschlossen sind. Außerdem ist die Bremsdruckkammer 50 über eine hydraulische Verbindung 52 mit dem Druckmittelvorratsbehälter 4 (Fig. 1) verbunden, die durch eine Relativbewegung des Bremsdruckkolbens 48 gegenüber dem Gehäuse 45 absperrbar ist. Der Zwischenraum 51 ist mittels einer Leitung 34 mit dem von der Ventilanordnung 13 bereitgestellten Druck beaufschlagbar. Außerdem nimmt der Reaktionskolben 47 einen Simulatorkolben 54 auf, der im Inneren des Reaktionskolbens 47 eine Simulatorkammer 55 begrenzt, in der eine Simulatorfeder 56, die sich am Simulatorkolben 54 abstützt, angeordnet ist. Die Simulatorkammer 55 ist über näher nicht bezeichnete Durchgänge im Reaktionskolben 47 und dem Gehäuse 45 an eine von der Verbindung 52 abzweigende, weitere Verbindung 57 angeschlossen, die durch eine Relativbewegung des Reaktionskolbens 47 gegenüber dem Gehäuse 45 absperrbar ist. Die Komponenten 54, 55, 56 bilden den im Zusammenhang mit Fig. 1 erwähnten Simulator 3.

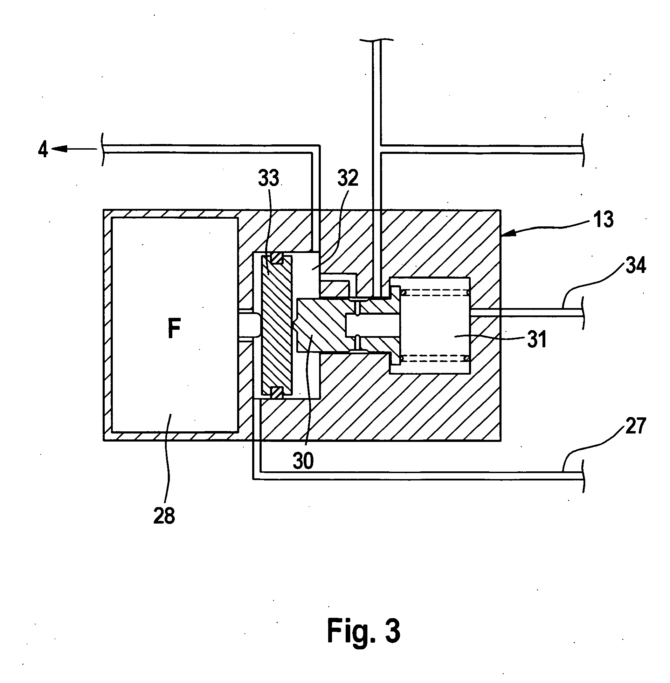

Wie insbesondere Fig. 3 zu entnehmen ist, weist die Ventilanordnung 13 einen Ventilkörper 30 auf, der in der gezeigten Schaltstellung eine hydraulische Verbindung zwischen einem Ausgangsraum 31, der mittels der Leitung 34 mit dem Zwischenraum 51 (Fig. 2) verbunden ist, und einer hydraulischen Kammer 32 ermöglicht, die mit dem Druckmittelvorratsbehälter 4 in Verbindung steht. Die Kammer 32 wird von einem hydraulischen Kolben 33 begrenzt, der einerseits, wie bereits oben erwähnt wurde, über die Leitung 27 mit dem im Hauptbremszylinder 2 eingesteuerten Druck belastet wird und andererseits mit dem elektromechanischen Aktuator 28 in kraftübertragender Verbindung steht.

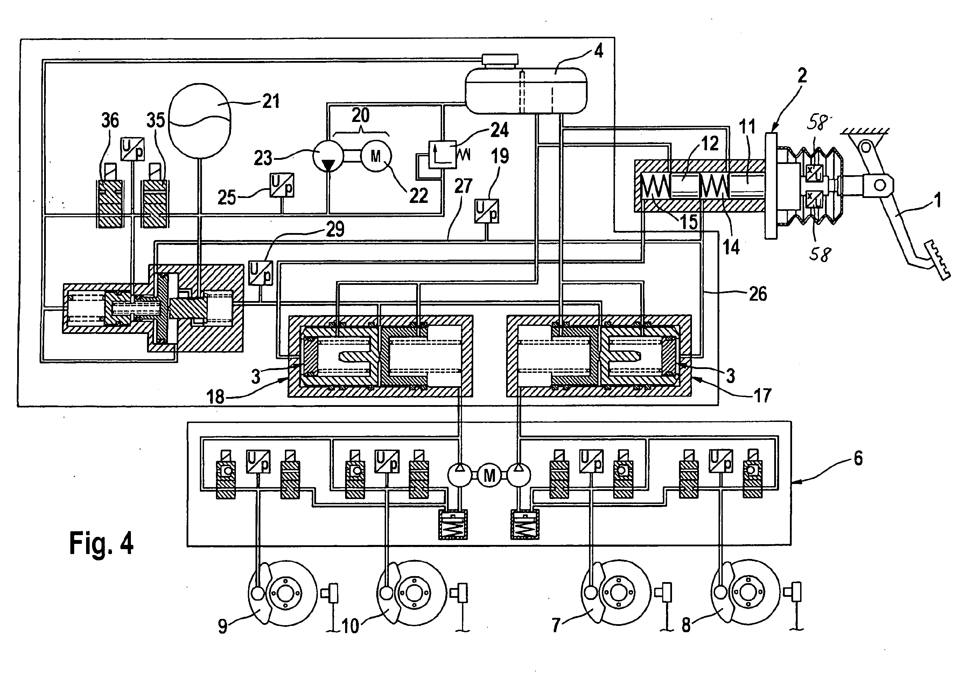

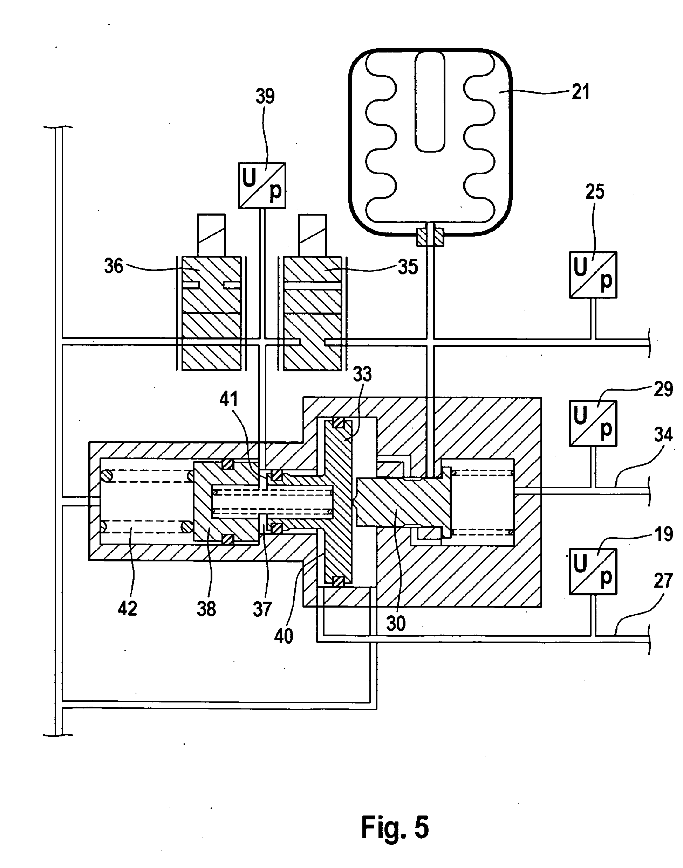

Bei den in Fig. 4 bis 7 gezeigten Ausführungen wird die im Zusammenhang mit Fig. 1 und 3 erwähnte Ventilanordnung 13 zusätzlich zur hydraulischen Ansteuerung durch den Hauptbremszylinder 2 durch elektrohydraulische Mittel angesteuert, die im gezeigten Beispiel durch elektrisch ansteuerbare, analog regelbare 2/2-Wegeventile 35, 36 gebildet sind. Das an den Ausgang der Druckquelle 20 bzw. 21 angeschlossene 2/2-Wegeventil 35 ist als stromlos geschlossenes (SG-)-Ventil ausgeführt, während das andere 2/2-Wegeventil 36 als ein stromlos offenes (SO-)Ventil ausgebildet ist. Die Ausgangsseite des erstgenannten Ventils 35 sowie die Eingangsseite des zweitgenannten Ventils 36 ist an einen hydraulischen Raum 37 (Fig. 5) angeschlossen, der einerseits vom Kolben 33 und andererseits von einem weiteren Kolben 38 begrenzt ist. Der durch die Ventile 35, 36 elektrisch analog regelbare Druck im Raum 37 wird mittels eines weiteren Drucksensors 39 überwacht. Wie insbesondere aus Fig. 5 zu erkennen ist, ist der Kolben 33 als Stufenkolben ausgebildet, dessen Ringfläche 40 mit dem vom Hauptbremszylinder 2 bereitgestellten Druck beaufschlagt wird, während auf seine Kolbenfläche 41 kleineren Durchmessers der durch die 2/2-Wegeventile 35, 36 elektrisch analog regelbare Druck einwirkt. Der andere Kolben 38 ist mittels einer Druckfeder 42 vorgespannt, wobei seine Bewegung entgegen der Kraft der Feder 42 eine Vergrößerung des hydraulischen Raumes 37 und somit eine Aufnahme des von den Ventilen 35, 36 bereit gestellten Druckmittelvolumens ermöglicht.

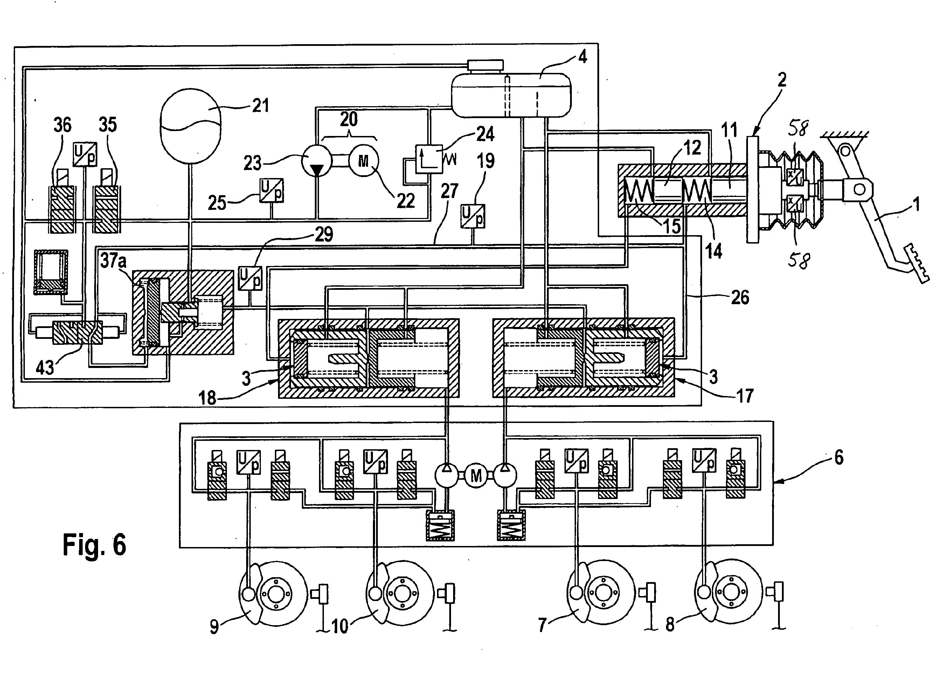

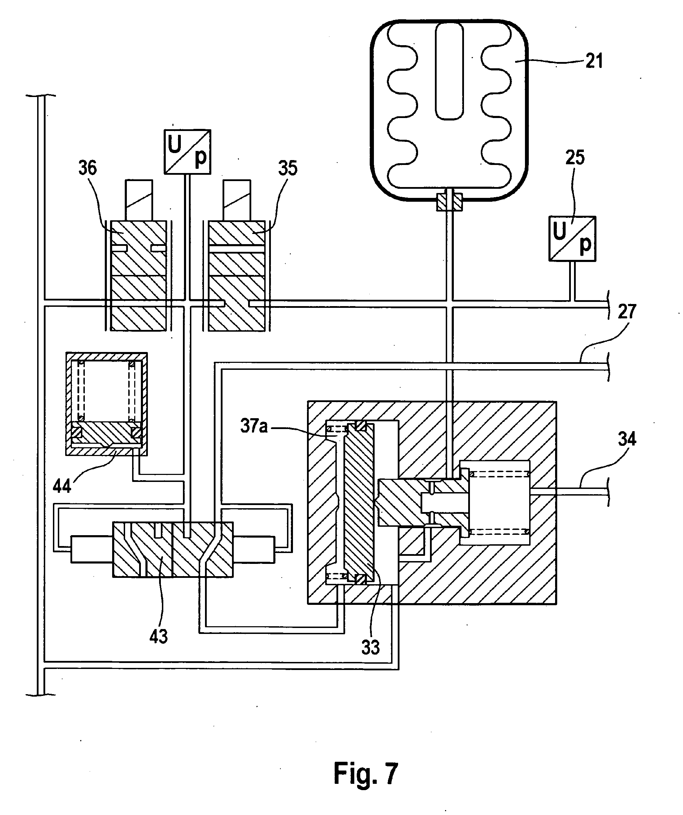

Bei dem in Fig. 6 und 7 gezeigten Ausführungsbeispiel ist in die Leitung zwischen den analog regelbaren 2/2-Wegeventilen 35, 36 und dem im Gehäuse der Ventileinrichtung 13 vom Kolben 33 begrenzten Raum 37a ein Wechselventil 43 eingefügt, das durch eine Druckdifferenz zwischen dem vom Hauptbremszylinder 2 bereitgestellten Druck und dem von den elektrohydraulischen Mitteln 35, 36 abgegebenen, elektrisch analog steuerbaren hydraulischen Druck betätigbar ist.

Die Betätigung des Wechselventils 43 erfolgt derart, dass der Kolben 33 mit dem jeweils höheren Druck beaufschlagt wird. Außerdem ist an die vorhin genannte Leitung ein Volumenaufnahmeelement 44 angeschlossen.

## Patentansprüche

1. Elektrohydraulische Bremsanlage für Kraftfahrzeuge, vom Typ "Brake-by-Wire" mit einem mittels eines Bremspedals (1) betätigbaren, mindestens einen Druckraum (14,15) aufweisenden Hauptbremszylinder (2), einem drucklosen Druckmittelvorratsbehälter (4), einem mit dem Hauptbremszylinder (2) zusammenwirkenden Wegsimulator (3), der im "Brake-by-Wire"-Modus dem Fahrzeugführer das herkömmliche Gefühl am Bremspedal (1) vermittelt,
einer mittels einer elektronischen Steuer- und Regeleinheit (16) ansteuerbaren hydraulischen Druckquelle, die aus einer hydraulischen Pumpe (23) sowie einem durch die Pumpe (23) aufladbaren Hochdruckspeicher (21) gebildet ist und durch deren Druck Radbremsen (7,8,9,10) des Fahrzeuges ansteuerbar sind, denen Druckregelventile zugeordnet sind, die durch die elektronische Steuer- und Regeleinheit (16) ansteuerbar sind, wobei in der Wirkungskette zwischen der Druckquelle (23 bzw. 21) und den Radbremsen (7, 8, 9, 10) eine Ventilanordnung (13) sowie mindestens eine Zylinder-Kolben-Anordnung (17, 18) vorgesehen sind, wobei die Ventilanordnung (13) sowohl hydraulisch durch den vom Hauptbremszylinder (2) bereitgestellten Druck als auch elektrisch steuerbar ausgebildet ist, und wobei die Zylinder-Kolben-Anordnung (17, 18) durch den von der Ventilanordnung (13) bereitgestellten Druck betätigbar ist, **dadurch gekennzeichnet, dass** die Zylinder-Kolben-Anordnung (17, 18) auch durch den vom Hauptbremszylinder (2) bereit gestellten Druck betätigbar ist.

2. Elektrohydraulische Bremsanlage nach Anspruch 1, **dadurch gekennzeichnet, dass** die Zylinder-Kolben-Anordnung (17, 18) durch ein Gehäuse (45) mit zylindrischer Bohrung (46), einen ersten bzw. Reaktionskolben (47), der mit dem im Hauptbremszylinder (2) eingesteuerten hydraulischen Druck beaufschlagbar ist, sowie einen im Gehäuse (45) dem ersten bzw. Reaktionskolben (47) gegenüberliegend angeordneten zweiten bzw. Bremsdruckkolben (48), der im Gehäuse (45) einerseits eine Bremsdruckkammer (50) begrenzt, an die die Radbremsen (7,8) angeschlossen sind, und andererseits mit dem von der Ventilanordnung (13) bereitgestellten Druck beaufschlagbar ist.

3. Elektrohydraulische Bremsanlage nach Anspruch 2, **dadurch gekennzeichnet, dass** der erste bzw. Reaktionskolben (47) und der zweite bzw. Bremsdruckkolben (48) einen Zwischenraum (51) begrenzen, der mit dem von der Ventilanordnung (13) bereitgestellten Druck beaufschlagbar ist.

4. Elektrohydraulische Bremsanlage nach Anspruch 2, **dadurch gekennzeichnet, dass** ein Innenraum des ersten bzw. Reaktionskolbens (47) eine hydraulische Simulatorkammer (55) bildet, die eine Simulatorfeder (56) aufnimmt und die von einem im ersten bzw. Reaktionskolben (47) geführten Simulatorkolben (54) begrenzt ist.

5. Elektrohydraulische Bremsanlage nach Anspruch 4, **dadurch gekennzeichnet, dass** die Simulatorfeder (56) durch eine Parallelanordnung einer linearen Feder sowie einer progressiven Feder, vorzugsweise einer Elastomerfeder, gebildet ist.

6. Elektrohydraulische Bremsanlage nach Anspruch 2, 3 oder 4, **dadurch gekennzeichnet, dass** die Bremsdruckkammer (50) mittels einer absperrbaren hydraulischen Verbindung (52) an den Druckmittelvorratsbehälter (4) angeschlossen ist.

7. Elektrohydraulische Bremsanlage nach Anspruch 6, **dadurch gekennzeichnet, dass** die hydraulische Verbindung (52) durch eine Relativbewegung des zweiten bzw. Bremsdruckkolbens (48) gegenüber dem Gehäuse (45) absperrbar ist.

8. Elektrohydraulische Bremsanlage nach einem der Ansprüche 4, 5, 6, wenn Anspruch 6 von Anspruch 4 abhangig, oder 7, **dadurch gekennzeichnet, dass** die Simulatorkammer (55) mittels einer absperrbaren hydraulischen Verbindung (57) an den Druckmittelvorratsbehälter (4) angeschlossen ist.

9. Elektrohydraulische Bremsanlage nach Anspruch 8, **dadurch gekennzeichnet, dass** die hydraulische Verbindung (57) durch eine Relativbewegung des ersten bzw. Reaktionskolbens (47) gegenüber dem Gehäuse (45) absperrbar ist.

10. Elektrohydraulische Bremsanlage nach einem der vorher gehenden Ansprüche, **dadurch gekennzeichnet, dass** die Ventilanordnung (13) einen analog steuerbaren hydraulischen Bremsdruck abgibt.

11. Elektrohydraulische Bremsanlage nach einem der vorher gehenden Ansprüche, **dadurch gekennzeichnet, dass** zum elektrischen Steuern des von der Ventilanordnung (13) abgegebenen Bremsdrucks ein elektrischer Aktuator (28) vorgesehen ist.

12. Elektrohydraulische Bremsanlage nach einem der vorher gehenden Ansprüche 1 bis 10, **dadurch gekennzeichnet, dass** zum elektrischen Steuern des von der Ventilanordnung (13) abgegebenen Bremsdrucks elektrohydraulische Mittel (35, 36) vorgesehen sind, die einen elektrisch analog steuerbaren Druck abgeben.

13. Elektrohydraulische Bremsanlage nach Anspruch 12, **dadurch gekennzeichnet, dass** die elektrohydraulischen Mittel durch elektrisch ansteuerbare, analog regelbare Wegeventile (35, 36) gebildet werden, die mit der Druckquelle (23 bzw. 21) und dem Druckmittelvorratsbehälter (4) hydraulisch verbunden sind.

14. Elektrohydraulische Bremsanlage nach einem der vorher gehenden Ansprüche **dadurch gekennzeichnet, dass** die Betätigung der Ventilanordnung (13) mittels eines Betätigungselementes (33) erfolgt, das mit einem Ventilkörper (30) der Ventilanordnung (13) in kraftübertragender Verbindung steht.

15. Elektrohydraulische Bremsanlage nach einem der vorher gehenden Ansprüche, **dadurch gekennzeichnet, dass** die Ventilanordnung (13) als ein Schieberventil ausgebildet ist.

16. Elektrohydraulische Bremsanlage nach Anspruch 14 oder 15, **dadurch gekennzeichnet, dass** das Betätigungselement (33) als ein hydraulischer Kolben ausgeführt ist, der sowohl mit dem vom Hauptbremszylinder (2) bereitgestellten Druck als auch mit dem elektrisch analog steuerbaren Druck beaufschlagbar ist.

17. Elektrohydraulische Bremsanlage nach Anspruch 16, **dadurch gekennzeichnet, dass** der hydraulische Kolben einen hydraulischen Raum (37,37a) begrenzt, der mit einem der bereitgestellten Drücke beaufschlagbar ist.

18. Elektrohydraulische Bremsanlage nach Anspruch 17, **dadurch gekennzeichnet, dass** in den Verbindungen zwischen dem Hauptbremszylinder (2) und dem hydraulischen Raum (37a) sowie zwischen der Druckquelle (23 bzw. 21) und dem hydraulischen Raum (37a) ein Wechselventil (43) eingefügt ist, das durch eine Druckdifferenz zwischen dem vom Hauptbremszylinder (2) bereitgestellten Druck und dem elektrisch analog steuerbaren Druck betätigt wird.

19. Elektrohydraulische Bremsanlage nach Anspruch 18, **dadurch gekennzeichnet, dass** die Betätigung des Wechselventils (43) derart erfolgt, dass der hydraulische Raum (37a) mit dem jeweils höheren Druck beaufschlagt wird.

20. Elektrohydraulische Bremsanlage nach einem der Ansprüche 16 bis 17, **dadurch gekennzeichnet, dass** der hydraulische Kolben (33) als ein Stufenkolben ausgeführt ist, dessen eine Ringfläche (40) mit dem vom Hauptbremszylinder (2) bereitgestellten Druck beaufschlagt ist, während dessen andere Kolbenfläche (41) mit dem elektrisch analog steuerbaren Druck beaufschlagt ist.

21. Elektrohydraulische Bremsanlage nach einem der Ansprüche 17 oder 20, wenn von Anspruch 17 abhängig, **dadurch gekennzeichnet, dass** der hydraulische Raum (37) andererseits von einem weiteren, mittels einer Druckfeder (42) vorgespannten Kolben (38) begrenzt wird, dessen Bewegung gegen die Kraft der Druckfeder (42) eine Volumenaufnahme für das von den elektrohydraulischen Mitteln (35, 36) abgegebene Druckmittel ermöglicht.

## Claims

1. Electrohydraulic brake system for motor vehicles, of the "brake-by-wire" type, with a brake master cylinder (2) actuable by means of a brake pedal (1) and having at least one pressure space (14, 15), with a pressureless pressure-medium reservoir (4), with a travel simulator (3) which cooperates with the brake master cylinder (2) and which, in the "brake-by-wire" mode, gives the vehicle driver the customary sensation on the brake pedal (1), with a hydraulic pressure source which is activatable by means of an electronic control and regulating unit (16) and which is formed from a hydraulic pump (23) and a high-pressure accumulator (21) chargeable by the pump (23) and by the pressure of which wheel brakes (7, 8, 9, 10) of the vehicle are activatable, which are assigned pressure-regulating valves which are activatable by the electronic control and regulating unit (16), a valve arrangement (13) and at least one cylinder/piston arrangement (17, 18) being provided in the chain of action between the pressure source (23 or 21) and the wheel brakes (7, 8, 9, 10), the valve arrangement (13) being designed to be controllable both hydraulically by the pressure provided by the brake master cylinder (2) and electrically, and the cylinder/piston arrangement (17, 18) being actuable by the pressure provided by the valve arrangement (13), **characterized in that** the cylinder/piston arrangement (17, 18) is also actuable by the pressure provided by the brake master cylinder (2).

2. Electrohydraulic brake system according to Claim 1, **characterized in that** the cylinder/piston arrangement (17, 18) is formed by a housing (45) with a cylindrical bore (46), by a first or reaction piston (47) which can be acted upon by the hydraulic pressure fed in the brake master cylinder (2), and by a second or brake-pressure piston (48) which is arranged opposite the first or reaction piston (47) in the housing (45) and which, on the one hand, delimits in the housing (45) a brake-pressure chamber (50) to which the wheel brakes (7, 8) are connected and, on the other hand, can be acted upon by the pressure provided by the valve arrangement (13).

3. Electrohydraulic brake system according to Claim 2, **characterized in that** the first or reaction piston (47) and the second or brake-pressure piston (48) delimit an interspace (51) which can be acted upon by the pressure provided by the valve arrangement (13).

4. Electrohydraulic brake system according to Claim 2, **characterized in that** an inner space of the first or reaction piston (47) forms a hydraulic simulator chamber (55) which receives a simulator spring (56) and which is delimited by a simulator piston (54) guided in the first or reaction piston (47).

5. Electrohydraulic brake system according to Claim 4, **characterized in that** the simulator spring (56) is formed by a parallel arrangement of a linear spring and of a progressive spring, preferably an elastomeric spring.

6. Electrohydraulic brake system according to Claim 2, 3 or 4, **characterized in that** the brake-pressure chamber (50) is connected to the pressure-medium reservoir (4) by means of a hydraulic connection (52) capable of being shut off.

7. Electrohydraulic brake system according to Claim 6, **characterized in that** the hydraulic connection (52) can be shut off by means of a relative movement of the second or brake-pressure piston (48) with respect to the housing (45).

8. Electrohydraulic brake system according to one of Claims 4, 5, 6, if Claim 6 is dependent on Claim 4, or 7, **characterized in that** the simulator chamber (55) is connected to the pressure-medium reservoir (4) by means of a hydraulic connection (57) capable of being shut off.

9. Electrohydraulic brake system according to Claim 8, **characterized in that** the hydraulic connection (57) can be shut off by means of a relative movement of the first or reaction piston (47) with respect to the housing (45).

10. Electrohydraulic brake system according to one of the preceding claims, **characterized in that** the valve arrangement (13) discharges an analogue-controllable hydraulic brake pressure.

11. Electrohydraulic brake system according to one of the preceding claims, **characterized in that** an electrical actuator (28) is provided for the electrical control of the brake pressure discharged by the valve arrangement (13).

12. Electrohydraulic brake system according to one of the preceding Claims 1 to 10, **characterized in that** electrohydraulic means (35, 36), which discharge an electrically analogue-controllable pressure, are provided for the electrical control of the brake pressure discharged by the valve arrangement (13).

13. Electrohydraulic brake system according to Claim 12, **characterized in that** the electrohydraulic means are formed by electrically activatable analogue-regulatable multi-way valves (35, 36) which are connected hydraulically to the pressure source (23 or 21) and to the pressure-medium reservoir (4).

14. Electrohydraulic brake system according to one of the preceding claims, **characterized in that** the actuation of the valve arrangement (13) takes place by means of an actuating element (33) which is connected in a force-transmitting manner to a valve body (30) of the valve arrangement (13).

15. Electrohydraulic brake system according to one of the preceding claims, **characterized in that** the valve arrangement (13) is designed as a slide valve.

16. Electrohydraulic brake system according to Claim 14 or 15, **characterized in that** the actuating element (33) is designed as a hydraulic piston which can be acted upon both by the pressure provided by the brake master cylinder (2) and by the electrically analogue-controllable pressure.

17. Electrohydraulic brake system according to Claim 16, **characterized in that** the hydraulic piston delimits a hydraulic space (37, 37a) which can be acted upon by one of the pressures provided.

18. Electrohydraulic brake system according to Claim 17, **characterized in that** a changeover valve (43) is inserted in the connections between the brake master cylinder (2) and the hydraulic space (37a) and also between the pressure source (23 or 21) and the hydraulic space (37a) and is actuated by means of a pressure difference between the pressure provided by the brake master cylinder (2) and the electrically analogue-controllable pressure.

19. Electrohydraulic brake system according to Claim 18, **characterized in that** the actuation of the changeover valve (43) takes place in such a way that the hydraulic space (37a) is acted upon by the higher pressure in each case.

20. Electrohydraulic brake system according to either one of Claims 16 and 17, **characterized in that** the hydraulic piston (33) is designed as a stepped piston, one annular face (40) of which is acted upon by the pressure provided by the brake master cylinder (2), while its other piston face (41) is acted upon by the electrically analogue-controllable pressure.

21. Electrohydraulic brake system according to one of Claims 17 or 20, if dependent on Claim 17, **characterized in that** the hydraulic space (37) is delimited, on the other hand, by a further piston (38) which is prestressed by means of a compression spring (42) and of which the movement counter to the force of the compression spring (42) makes it possible to have a capacity for the pressure medium discharged by the electrohydraulic means (35, 36).

## Revendications

1. Système de freinage électrohydraulique pour véhicules automobiles, du type à "freinage par câble", comprenant
un cylindre de frein principal (2) pouvant être actionné au moyen d'une pédale de frein (1), présentant au moins un espace de pression (14, 15),
un réservoir de fluide de pression non pressurisé (4),
un simulateur de course (3) coopérant avec le cylindre de frein principal (2), qui confère au conducteur du véhicule la sensation usuelle sur la pédale de frein (1) en mode de "freinage par câble",
une source de pression hydraulique pouvant être commandée au moyen d'une unité de commande et de réglage électronique (16), qui est formée par une pompe hydraulique (23) et un accumulateur haute pression (21) pouvant être chargé par la pompe (23) et dont la pression permet de commander les freins de roue (7, 8, 9, 10) du véhicule,
auxquels sont associées des soupapes de régulation de la pression, qui peuvent être commandées par l'unité de commande et de réglage électronique (16), un système de soupapes (13) ainsi qu'au moins un système cylindre-piston (17, 18) étant prévus dans la chaîne d'opérations entre la source de pression (23, respectivement 21) et les freins de roue (7, 8, 9, 10), le système de soupapes (13) étant réalisé de manière à pouvoir être commandé à la fois hydrauliquement par la pression fournie par le cylindre de frein principal (2) et aussi de manière électrique, et le système cylindre-piston (17, 18) pouvant être actionné par la pression fournie par le système de soupapes (13), **caractérisé en ce que** le système cylindre-piston (17, 18) peut également être actionné par la pression fournie par le cylindre de frein principal (2).

2. Système de freinage électrohydraulique selon la revendication 1, **caractérisé en ce que** le système cylindre-piston (17, 18) est constitué par un boîtier (45) avec un alésage cylindrique (46), un premier piston ou piston de réaction (47), qui peut être sollicité par la pression hydraulique commandée dans le cylindre de frein principal (2), ainsi que par un deuxième piston ou piston de pression de freinage (48) disposé dans le boîtier (45) en regard du premier piston ou piston de réaction (47), qui limite dans le boîtier (45) d'une part une chambre de pression de freinage (50), à laquelle se raccordent les freins de roue (7, 8), et qui peut être sollicité d'autre part avec la pression fournie par le système de soupapes (13).

3. Système de freinage électrohydraulique selon la revendication 2, **caractérisé en ce que** le premier piston ou piston de réaction (47) et le deuxième piston ou piston de pression de freinage (48) délimitent un espace intermédiaire (51), qui peut être sollicité par la pression fournie par le système de soupapes (13).

4. Système de freinage électrohydraulique selon la revendication 2, **caractérisé en ce qu'**un espace interne du premier piston ou piston de réaction (47) forme une chambre de simulation hydraulique (55), qui reçoit un ressort de simulation (56) et qui est limitée par un piston de simulation (54) guidé dans le premier piston ou piston de réaction (47).

5. Système de freinage électrohydraulique selon la revendication 4, **caractérisé en ce que** le ressort de simulation (56) est formé par un agencement en parallèle d'un ressort linéaire et d'un ressort progressif, de préférence d'un ressort élastomère.

6. Système de freinage électrohydraulique selon la revendication 2, 3 ou 4, **caractérisé en ce que** la chambre de pression de freinage (50) est raccordée au moyen d'une connexion hydraulique blocable (52) au réservoir de fluide de pression (4).

7. Système de freinage électrohydraulique selon la revendication 6, **caractérisé en ce que** la connexion hydraulique (52) peut être bloquée par un mouvement relatif du deuxième piston ou piston de pression de freinage (48) par rapport au boîtier (45).

8. Système de freinage électrohydraulique selon l'une quelconque des revendications 4, 5, 6, lorsque la revendication 6 dépend de la revendication 4, ou 7, **caractérisé en ce que** la chambre de simulation (55) est raccordée au moyen d'une connexion hydraulique blocable (57) au réservoir de fluide de pression (4).

9. Système de freinage électrohydraulique selon la revendication 8, **caractérisé en ce que** la connexion hydraulique (57) peut être bloquée par un mouvement relatif du premier piston ou piston de réaction (47) par rapport au boîtier (45).

10. Système de freinage électrohydraulique selon l'une quelconque des revendications précédentes, **caractérisé en ce que** le système de soupapes (13) fournit une pression de freinage hydraulique pouvant être commandée de manière analogique.

11. Système de freinage électrohydraulique selon l'une quelconque des revendications précédentes, **caractérisé en ce que** pour la commande électrique de la pression de freinage fournie par le système de soupapes (13), on prévoit un actionneur électrique (28) .

12. Système de freinage électrohydraulique selon l'une quelconque des revendications précédentes 1 à 10, **caractérisé en ce que** pour la commande électrique de la pression de freinage fournie par le système de soupapes (13), on prévoit des moyens électrohydrauliques (35, 36) qui fournissent une pression pouvant être commandée électriquement de manière analogique.

13. Système de freinage électrohydraulique selon la revendication 12, **caractérisé en ce que** les moyens électrohydrauliques sont formés par des distributeurs (35, 36) à commande électrique, à réglage analogique, qui sont connectés hydrauliquement à la source de pression (23, respectivement 21) et au réservoir de fluide de pression (4).

14. Système de freinage électrohydraulique selon l'une quelconque des revendications précédentes, **caractérisé en ce que** l'actionnement du système de soupapes (13) s'effectue au moyen d'un élément d'actionnement (33), qui est en liaison de transmission de force avec un corps de soupape (30) du système de soupapes (13).

15. Système de freinage électrohydraulique selon l'une quelconque des revendications précédentes, **caractérisé en ce que** le système de soupapes (13) est réalisé sous forme de soupape à tiroir.

16. Système de freinage électrohydraulique selon la revendication 14 ou 15, **caractérisé en ce que** l'élément d'actionnement (33) est réalisé sous forme de piston hydraulique qui peut être sollicité à la fois par la pression fournie par le cylindre de frein principal (2) et par la pression à commande électrique analogique.

17. Système de freinage électrohydraulique selon la revendication 16, **caractérisé en ce que** le piston hydraulique délimite un espace hydraulique (37, 37a) qui peut être sollicité par l'une des pressions fournies.

18. Système de freinage électrohydraulique selon la revendication 17, **caractérisé en ce que** l'on insère dans les connexions entre le cylindre de frein principal (2) et l'espace hydraulique (37a) ainsi qu'entre la source de pression (23, respectivement 21) et l'espace hydraulique (37a), une soupape d'échange (43), qui est actionnée par une différence de pression entre la pression fournie par le cylindre de frein principal (2) et la pression à commande électrique analogique.

19. Système de freinage électrohydraulique selon la revendication 18, **caractérisé en ce que** l'actionnement de la soupape d'échange (43) s'effectue de telle sorte que l'espace hydraulique (37a) soit sollicité avec la pression respectivement la plus élevée.

20. Système de freinage électrohydraulique selon l'une quelconque des revendications 16 à 17, **caractérisé en ce que** le piston hydraulique (33) est réalisé sous forme de piston étagé, dont une surface annulaire (40) est sollicitée par la pression fournie par le cylindre de frein principal (2) tandis que l'autre surface de piston (41) est sollicitée par la pression à commande électrique analogique.

21. Système de freinage électrohydraulique selon l'une quelconque des revendications 17 ou 20, lorsqu'elle dépend de la revendication 17, **caractérisé en ce que** l'espace hydraulique (37) est limité d'autre part par un autre piston (38) précontraint au moyen d'un ressort de pression (42), dont le mouvement à l'encontre de la force du ressort de pression (42) permet une augmentation de volume pour le fluide de pression fourni par les moyens électrohydrauliques (35, 36).
